# EUROPEAN PATENT SPECIFICATION

(11) **EP 0 630 939 B1**
(45) Date of publication and mention of the grant of the patent: **02.09.1998**
(21) Application number: 94304379.4
(22) Date of filing: 16.06.1994
(51) Int. Cl.: C08L 23/04

(54) **Film and laminate film for metal deposition**
Folie und Schichtfolie für Metallabsetzung
Film et film laminé pour déposition de métal

(30) Priority: 21.06.1993 JP 149085/93
(43) Date of publication of application: 28.12.1994
(73) Proprietor: SUMITOMO CHEMICAL COMPANY LIMITED, Osaka-shi, Osaka 541 (JP)
(72) Inventor: Ima, Seiichiro, Ichihara-shi, Chiba (JP); Shiratani, Eisuke, Ichihara-shi, Chiba (JP); Satoh, Makoto, Ichihara-shi, Chiba (JP)
(74) Representative: Dixon, Donald Cossar

(56) References cited:
- EP-A- 0 353 068
- EP-A- 0 492 163
- TEXTBOOK OF POLYMER SCIENCE, F.W. BILLMEYER, JR., 3rd EDITION p.362 1984, John Wiley & Sons

## Description

The present invention relates to a film and a laminate film for metal deposition, which films provide excellent deposition properties, excellent adhesive strength between a deposited metal layer and the film for metal deposition, and good appearance both before and after metal deposition.

Metal-deposited films obtained by depositing metal on plastics film are widely used as packaging materials because of their excellent gas barrier and light-shielding properties. Such films are commonly formed of polyethylene terephthalate or polypropylene: polyolefin film has poor adhesive strength to a deposited metal layer. Many proposals have been made to improve the adhesion of a polyolefin film; for example, JP-B-57-14377 (the term "JP-B" as used herein means an examined Japanese patent publication) and JP-A-56-72037 (the term "JP-A" as used herein means an unexamined published Japanese patent application) disclose modifying polypropylene with unsaturated carboxylic acids and blending the modified polypropylene with polypropylene or a mixture of polypropylene and a large amount of an inorganic filler; and JP-B-60-51553 discloses improving the adhesion of polypropylene by gradually cooling it when forming a film to yield a roughened surface.

However, the above expedients are still inadequate. The polypropylene modified by graft polymerization and then blended exhibits insufficient improvement in adhesive strength to a deposited metal layer; and in the cases of mixing a large amount of an inorganic filler and making a surface-roughened film by gradually cooling, a metal-deposited layer having a good appearance is not obtained.

European Patent No. 0 353 068 discloses an overlay film obtained by forming a substrate layer composed of a resin composition comprising an ethylene copolymer, such as ethylene-methacrylic acid ester copolymer, and a crystalline polyolefin having a melting point of 110°C or higher on at least one side of a base layer, preferably composed of a crystalline polyolefin, by any method, such as co-extrusion laminating, followed by cooling; and European Patent No. 0 492 163 discloses a linear random N-substituted acrylamide copolymer comprising 65 to 99 % by mole of ethylene units, 1 to 15 % by mole of acrylate units and 1 to 35 % by mole of acrylamide units, the copolymer having a weight average molecular weight of 1000 to 5000, and also discloses an aqueous composition, a resin film, a laminate, recording paper and a foamed article comprising the N-substituted acrylamide copolymer, respectively. In particular, the N-substituted acrylamide provides good antistatic ability for thermoplastic resins without lowering physical properties such as transparency and elongation. However, these above expedients are also inadequate in both adhesive strength and appearance.

Accordingly, an object of the invention is to provide a polyolefin film having greatly improved adhesive strength to a deposited metal layer without damaging the characteristics such as good appearance and heat resistance that the polyolefin inherently possesses.

It has been found that a film for metal deposition, which has excellent adhesive strength to a deposited metal layer, good deposition properties, and good appearance after deposition can be obtained by using a resin composition obtained by blending a relatively small amount of a specific ethylene copolymer with a specific crystalline ethylene polymer to prepare a film or a laminate film.

The film for metal deposition according to the present invention formed from a resin composition comprising :
(I) from 90.5 to 99.9% by weight of a crystalline ethylene polymer having a melting point of from 120 to 130°C and a density of from 0.910 to 0.940 g/cm³, and
(II) from 0.1 to 9.5% by weight of at least one ethylene copolymer having an ethylene content of from 50 to 90 or 95% by weight selected from an ethylene-(meth)acrylate copolymer, and ethylene-(meth)acrylic acid copolymer, an ethylene-unsaturated glycidyl monomer-vinyl acetate terpolymer, and an ethylene-unsaturated dicarboxylic anhydride-(meth)acrylate terpolymer.

The laminate film for metal deposition according to the present invention comprises a substrate layer having on at least one surface thereof a layer for metal deposition formed from the above resin composition.

The crystalline ethylene polymer used in the present invention is an ethylene-α-olefin copolymer obtained by copolymerizing ethylene with α-olefin having 3 to 20 carbon atoms using a transition metal catalyst such as a Ziegler catalyst. Copolymerization reaction is usually conducted at a polymerization temperature of from 30 to 300°C and a polymerization pressure of from atmospheric pressure to 3,000 kg/cm² in the presence or absence of a solvent. Propylene, butene-1, 4-methylpentene-1, hexene-1, and octene-1 are preferred as the α-olefin.

It is important that the crystalline ethylene polymer (I) has a melting point of from 120 to 130°C and a density of from 0.910 to 0.940 g/cm³. If either one or both of the melting point and the density are outside the above range(s), the adhesive strength of a deposited metal layer to the film for metal deposition are poor or the gloss or heat resistance of a metal-deposited film or the non-deposited film are poor, resulting in poor appearance; and such a film cannot be used in the present invention.

From the standpoint of the adhesive strength to a deposited metal layer, gloss and heat resistance, it is preferred that the crystalline ethylene polymer has a melting point of from 122 to 128°C and a density of from 0.915 to 0.935 g/cm³.

The ethylene copolymers (II) are obtained by copolymerizing a monomer capable of radically copolymerizing (hereinafter referred to as a "comonomer"), with ethylene using a free radical-generator such as an organic peroxide or oxygen. The copolymerization reaction is usually conducted at a polymerization temperature of from 130 to 300°C and a polymerization pressure of from 500 to 3,000 kg/cm².

Examples of the ethylene-(meth)acrylate copolymer are copolymers of ethylene with methyl methacrylate, ethyl methacrylate, butyl methacrylate, 2-ethylhexyl methacrylate, methyl acrylate, ethyl acrylate, butyl acrylate, or 2-ethylhexyl acrylate. Of these, the copolymer of ethylene and methyl methacrylate is preferred.

Examples of the ethylene-(meth)acrylic acid copolymer are copolymers of ethylene with methacrylic acid or acrylic acid.

Examples of the ethylene-unsaturated glycidyl monomer-vinyl acetate terpolymer are terpolymers of ethylene, an unsaturated glycidyl monomer such as glycidyl acrylate, glycidyl methacrylate or monoglycidyl itaconate, and vinyl acetate. Of these, a terpolymer of ethylene, glycidyl methacrylate and vinyl acetate is preferred.

Examples of the ethylene-unsaturated dicarboxylic anhydride-(meth)acrylate terpolymer are terpolymers of ethylene, an unsaturated dicarboxylic anhydride such as maleic anhydride, citraconic anhydride or tetrahydrophthalic anhydride, and (meth)acrylate such as ethyl acrylate or methyl methacrylate. Of these, a terpolymer of ethylene, maleic anhydride and ethyl acrylate is preferred.

From the standpoint of cost and ease of handling, the copolymer of ethylene and methyl methacrylate is particularly preferred as the ethylene copolymer (II).

The ethylene copolymer used in the present invention preferably has the melting point of 50°C or higher from the standpoint of heat resistance.

The resin composition comprising the specific crystalline ethylene polymer and the specific ethylene copolymer each described above is used as the film for metal deposition of the present invention. The amounts of both components used are such that the amount of the crystalline ethylene polymer is from 90.5 to 99.9% by weight and the amount of the ethylene copolymer is from 0.1 to 9.5% by weight. If the amount of the ethylene copolymer is less than 0.1% by weight, an improved effect in adhesive strength of the deposited metal layer is insufficient, and if it exceeds 9.5% by weight, the appearance of non-deposited film is poor or the metal gloss of a deposited film is insufficient.

In the resin composition, the amount of the ethylene copolymer is preferably from 0.2 to 9.0% by weight, and more preferably from 0.4 to 8.0% by weight.

It is preferred in the resin composition to add an anti-oxidizing agent having a melting point of 75°C or higher in an amount of from 0.01 to 0.2 part by weight and an anti-blocking agent in an amount up to 3 parts by weight, per 100 parts by weight of the resin compositions, from the standpoints of a processing stability in forming a film and ease of handling the film. If an anti-oxidizing agent having a melting point of less than 75°C is used or an anti-oxidizing agent is used in an amount exceeding 0.2 part by weight, the adhesive strength of a deposited metal layer is undesirably decreased. If the amount of the anti-oxidizing agent added is less than 0.01 part by weight, the processing stability in forming the film is insufficient. Examples of the anti-oxidizing agent are tetra[methylene-3-(3,5-di-tertiarybutyl-4-hydroxyphenyl)-propionate]methane (tradename: Irganox® 1010, manufactured by Nippon Ciba Geigy Co., Ltd.), 1,3,5-trimethyl-2,4,6-tris(3,5-di-tertiarybutyl-4-hydroxybenzyl)benzene (tradename: Irganox® 1330), and tris(3,5-di-tertiarybutyl-4-hydroxybenzyl)isocyanurate (tradename: Irganox® 3114). Of these, tetra[methylene-3-(3,5-di-tertiarybutyl-4-hydroxyphenyl) propionate]methane is preferred.

An inorganic material fine powder or a polymeric material such as a crosslinked type polymeric bead or nylon can be used as the anti-blocking agent, and the amount thereof added is 0 to 3 parts by weight per 100 parts by weight of the resin composition and the substrate layer. Where the addition amount exceeds 3 parts by weight, the appearance of the laminate film obtained is damaged. Silicon oxide, aluminum silicate, hydrotalcite, and crosslinked PMMA-bead, each having an average particle diameter of from 0.3 to 10 µm, are useful as the anti-blocking agent.

The resin composition for forming the film for metal deposition of the present invention can be obtained by mixing the crystalline ethylene polymer, the ethylene copolymer, and if necessary, the anti-oxidizing agent and/or the anti-blocking agent. The mixing methods which can be employed are various conventional methods for mixing the respective components in the ranges described above, for example, a method in which the components are dry blended using a mixer such as a Henschel mixer or a tumbler blender, and a method in which after mixing, the mixture is further melt-kneaded and pelletized using a single screw extruder or a multi-screw extruder. Mixing of the respective components can be conducted by a method in which all the components are mixed at once or by a method in which a part thereof is mixed in advance and the remainder is then mixed.

Where the film for metal deposition of the present invention is formed into a laminate film, the substrate layer therefor can be selected from polymers which can be formed into a film, cellophane, paper, paper board, fabric, and aluminum .

Examples of the polymer which can be used include a crystalline polyolefin, a polyamide resin, a polyester resin, polyvinyl alcohol, and polyvinyl chloride. Of these, crystalline polyolefin is preferred from the standpoint of rigidity of the laminate film, the appearance thereof after deposition and ease in forming the film; and a crystalline ethylene polymer or a crystalline propylene polymer, each having a melting point of 120°C or higher, is more preferred.

The film for metal deposition of the present invention can be prepared by a conventional film-forming process such as a T-die process by melt-kneading and extruding the resin composition using an extruder, or a tubular process. In particular, the film is suitably prepared by a process for preparing an unstretched film by the T-die process.

The thickness of the film of the present invention is preferably from 10 to 500 µm, and more preferably from 10 to 100 µm.

The laminate film for metal deposition can be prepared by melt-kneading and extruding a layer for metal deposition and a substrate layer using two extruders and laminating the two layers in the molten state by a conventional process such as a feed block process or a co-extruding multilayer die process, and then cooling with a cooling roll. Further, the laminate film can be prepared in the form of a layer for metal deposition/substrate layer/polypropylene copolymer using three extruders, and a method for laminating a layer for metal deposition on the substrate layer with a dry laminating process or an extrusion laminating process. A co-extrusion laminating process is preferred and an unstretched co-extrusion laminating process is more preferred.

It is preferred that the thickness of the deposited layer is 1/2 to 1/100 of the total thickness of the laminate film from the standpoints of rigidity and cost.

The film for metal deposition of the present invention is preferably subjected to a surface treatment on the surface thereof on which metal is deposited by a conventional method such as a corona treatment, a flame treatment or a plasma treatment so that the wetting index becomes 0.037 N/m (37 dynes/cm) or more.

The film for metal deposition of the present invention can suitably be used as a film for depositing thereon a metal such as aluminum, gold, silver, copper, nickel, chromium, titanium, tin or zinc by a method such as an electric heating method, an ion beam method, a sputtering method, or an ion plating method, under vacuum. It is particularly suitable where aluminum is used.

The thickness of a deposited metal layer is usually from 5 to 100 nm (50 to 1,000 Å).

The present invention will be explained in more detail by reference to the following Examples.

The measurement values of the respective items in the description and the following Examples were measured by the following methods:
(1) Melt Flow Rate:
   According to JIS K7210, a crystalline ethylene polymer and an ethylene copolymer were measured by the method of Condition-4 and a crystalline propylene polymer was measured by the method of Condition-14.
(2) Melting Point:
   Using a differential scanning calorimeter ("DSC" manufactured by Perkin-Elmer Co., Ltd.), 10 mg of a test piece was melted at 220°C for 5 minutes under a nitrogen atmosphere and the temperature was lowered to 40°C at a temperature-lowering rate of 5°C/minute. The temperature was raised at a rate of 5°C/minute to determine a peak temperature in the maximum peak of the melt endothermic curve as a melting point.
   The melting point of indium (In) which was measured with the above measurement instrument at the temperature-raising rate of 5°C/minute was 156.6°C.
(3) Density:
   Measured according to JIS K6760.
(4) Wetting Index:
   Measured according to JIS K6768.
(5) Haze:
   Measured according to JIS K7105.
(6) Gloss:
   A 45° specular gloss was measured according to JIS K7105.
(7) Deposition Property:
   An electric heating type deposition apparatus was used to deposit aluminum on a film under vacuum of 2.7x10⁻³ Pa (2×10⁻⁵ Torr) and the appearance of a deposited surface was visually observed.
(8) Metallic Luster:
   A 60° specular gloss was measured according to JIS Z8741.
(9) Adhesive Strength:
   A deposited surface of a metal-deposited film and a polypropylene-biaxially stretched film having a thickness of 25 µm (OPP) were bonded by a dry laminate method applying a polyurethane adhesive in an amount of 3 g/m² in terms of a solid content. The bonded film was heat treated at 40°C for 24 hours and then allowed to stand at 23°C for 2 hours. The adhesive strength between the deposited film layer and the OPP layer was measured with a tensile tester.

### EXAMPLE 1

97.5% by weight of an ethylene-hexene-1 copolymer having a melt flow rate of 2.0 g/10 minutes, a melting point of 123°C and a density of 0.919 g/cm³ as a crystalline ethylene polymer (I) and 2.5% by weight of an ethylene-methyl methacrylate copolymer having a melt flow rate of 6.9 g/10 minutes, an ethylene content of 85% by weight and a melting point of 95°C as an ethylene copolymer (II) were mixed with a Henschel mixer, and the mixture was then melt-extruded at 220°C to pelletize it. The crystalline ethylene polymer (I) used contained 0.1% by weight of Irganox® 1010 as an anti-oxidizing agent and 0.1% by weight of hydrotalcite DHT-4A (manufactured by Kyowa Chemical Co., Ltd.) as an anti-blocking agent, and the ethylene copolymer (II) used did not contain additives such as an anti-oxidizing agent and an anti-blocking agent. The pellets obtained above were melt-extruded with a monolayer T-die extruding machine at a die temperature of 220°C and cooled with a cooling roll at 30°C. One surface of the resulting film was subjected to a corona discharge treatment to obtain film having a thickness of 30 µm and a wetting index of 0.047 N/m (47 dynes/cm).

This film was measured for haze and gloss. Further, aluminum was deposited on a corona-treated surface of this film to evaluate deposition property, metallic luster and adhesive strength.

The results obtained are shown in Table 1 below.

### COMPARATIVE EXAMPLE 1

A film was formed in the same manner as in Example 1, except that the ethylene copolymer (II) was not used. The film had a wetting index of 0.045 N/m (45 dynes/cm). This film was measured and evaluated in the same manners as in Example 1.

The results obtained are shown in Table 1 below.

### EXAMPLES 2 TO 5 AND COMPARATIVE EXAMPLES 2 TO 7

Films were formed, measured and evaluated in the same manners as in Example 1, except that the kind of the crystalline ethylene polymer (I) or the amounts of the crystalline ethylene polymer (I) used and the ethylene copolymer (II) used were changed.

The results obtained are shown in Table 1 below.

### EXAMPLES 6 TO 9

Films were formed, measured and evaluated in the same manners as in Example 1, except that the kind of the ethylene copolymer (II) was changed.

The results obtained are shown in Table 2 below.

### EXAMPLE 10

A blend of 95.0% by weight of the crystalline ethylene polymer (I) and 5.0% by weight of the ethylene copolymer (II) each used in Example 1 was used as the resin composition for a layer for deposition, and a crystalline propylene-ethylene-butene-1 copolymer having a melt flow rate of 6.2 g/10 minutes, a propylene content of 92% by weight, an ethylene content of 2% by weight, a butene content of 6% by weight and a melting point of 139°C was used as the substrate layer. Melt laminating extrusion was conducted at a die temperature of 220°C using two extruders and a double layer T-die connected thereto, followed by cooling with a cooling roll at 30°C, and further subjecting the layer for deposition to a corona discharge treatment. A laminate film having a wetting index of 0.046 N/m (46 dynes/cm) and composed of a layer for deposition having a thickness of 10 µm and a substrate layer having a thickness of 25 µm was obtained.

This laminate film was measured and evaluated in the same manner as in Example 1.

The results obtained are shown in Table 3 below.

### COMPARATIVE EXAMPLE 8

A film was formed in the same manner as in Example 10, except that the crystalline ethylene polymer (I) used in Example 2 was used as the resin composition for a layer for deposition. This film had a wetting index of 0.045 N/m (45 dynes/cm). This film was measured and evaluated in the same manners as in Example 1.

The results obtained are shown in Table 3 below.

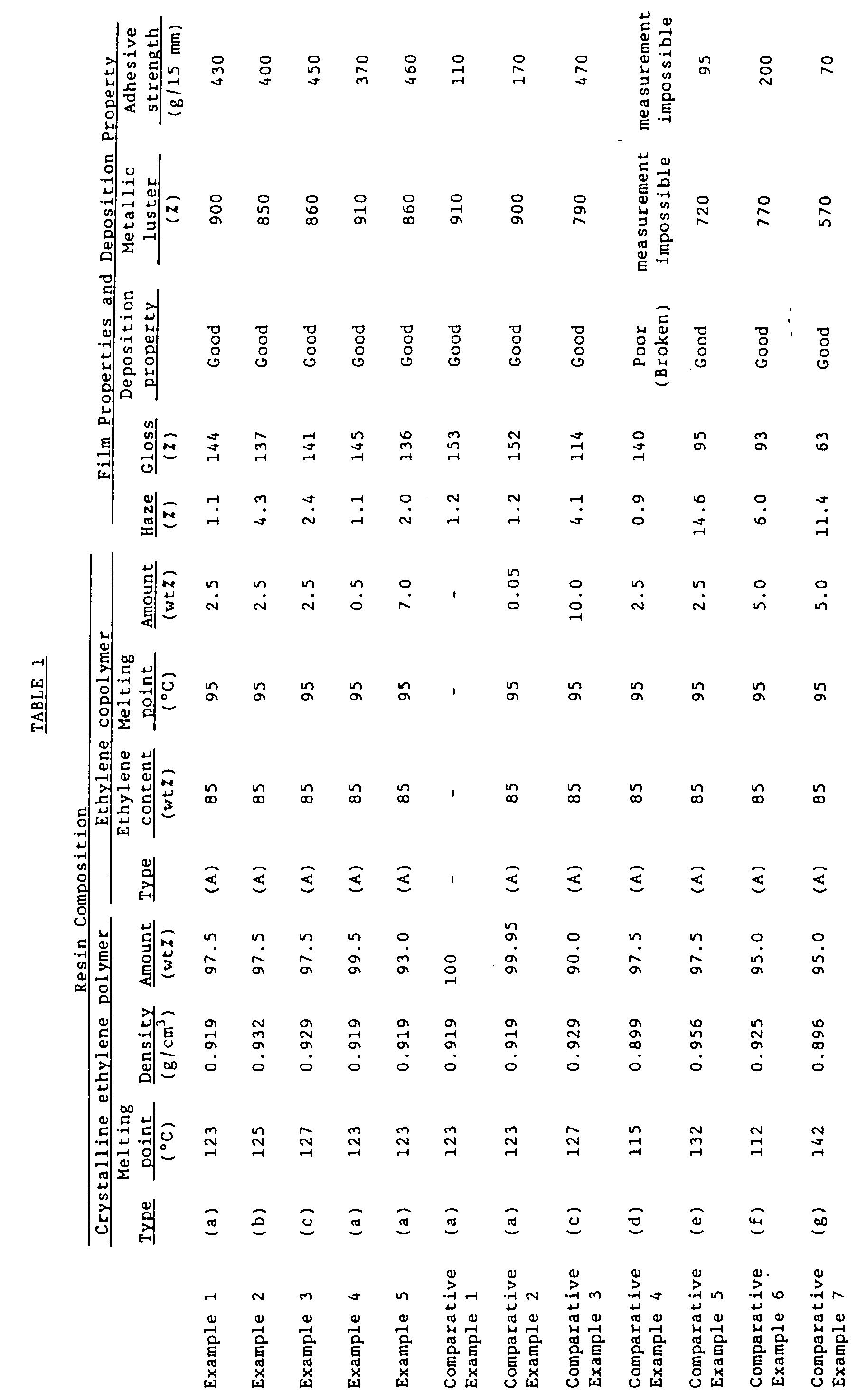

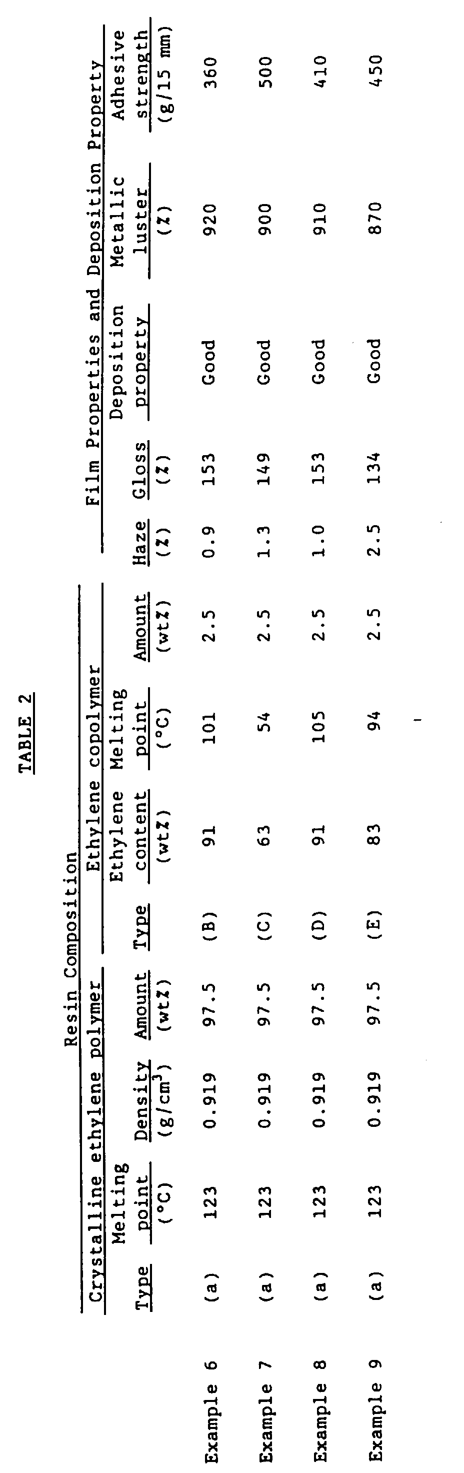

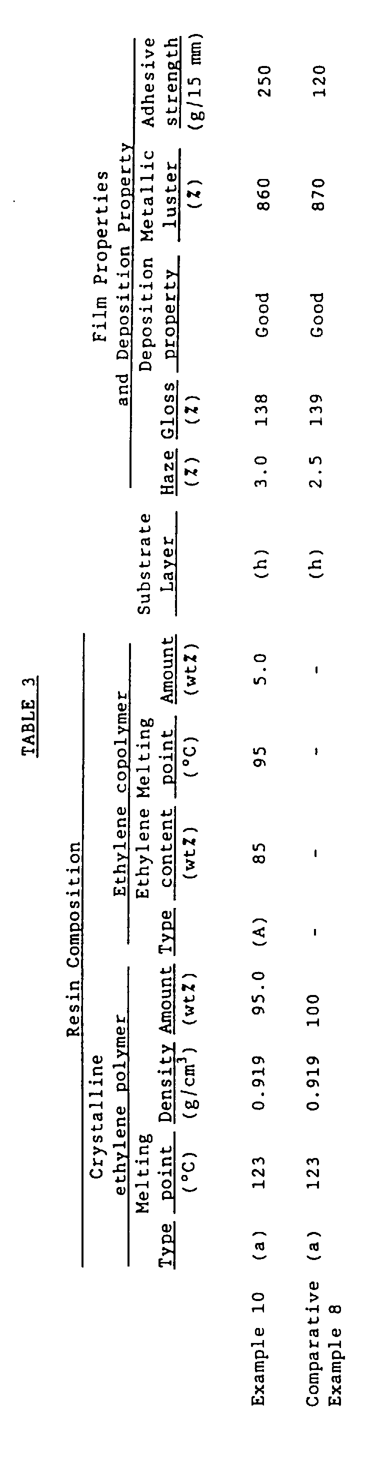

The types of the crystalline ethylene polymer, the ethylene copolymer and the substrate layer used in the Examples and the Comparative Examples are as follows.

| | Melt flow rate (g/10 minutes) |
|---|---|
| (a) Ethylene/hexene-1 copolymer | 2.0 |
| | |
| (b) Ethylene/hexene-1 copolymer | 2.1 |
| | |
| (c) Ethylene/hexene-1 copolymer (75 parts) + high density polyethylene (25 parts) | 2.7 |
| | |
| (d) Ethylene/butene-1 copolymer | 3.9 |
| | |
| (e) High density polyethylene | 15 |
| | |
| (f) Low density polyethylene | 4.0 |
| | |
| (g) Ethylene (4 wt%)/propylene copolymer | 7.2 |
| | |
| (h) Propylene (92 wt%)/ethylene (2 wt%)/butene-1 (6 wt%) copolymer (melting point: 139°C) | 6.2 |
| | |
| (A) Ethylene/methyl methacrylate (15 wt%) copolymer | 6.9 |
| | |
| (B) Ethylene/methyl methacrylate (9 wt%) copolymer | 3.6 |
| | |
| (C) Ethylene/methyl methacrylate (37 wt%) copolymer | 45 |
| | |
| (D) Ethylene/ethyl acrylate (6 wt%)/maleic anhydride (3 wt%) copolymer | 5.3 |
| | |
| (E) Ethylene/glycidyl methacrylate (12 wt%)/vinyl acetate (5 wt%) copolymer | 6.8 |

As can be seen from the results shown in the Tables above, by using a single layer film or a laminate film, which is prepared using a resin composition comprising a specific crystalline ethylene polymer (I) and a specific ethylene copolymer (II) in specific amounts, a film for metal deposition having greatly improved deposition property and adhesive strength to a deposited metal layer can be obtained without damaging the characteristics such as appearance, and heat resistance a polyolefin film inherently possesses.

## Claims

1. A film for metal deposition formed from a resin composition comprising :
(I) from 90.5 to 99.9% by weight of a crystalline ethylene polymer having a melting point of from 120 to 130°C and a density of from 0.910 to 0.940 g/cm³, and
(II) from 0.1 to 9.5% by weight of at least one ethylene copolymer having an ethylene content of from 50 to 95% by weight selected from an ethylene-(meth)acrylate copolymer, an ethylene- (meth) acrylic acid copolymer, an ethylene-unsaturated glycidyl monomer-vinyl acetate terpolymer, and an ethylene-unsaturated dicarboxylic anhydride-(meth) acrylate terpolymer.

2. A film as claimed in claim 1, wherein said crystalline ethylene polymer (I) is an ethylene-α-olefin copolymer.

3. A film as claimed in claim 2, wherein said α-olefin is propylene, butene-1, 4-methylpentene-1, hexene-1, or octene-1.

4. A film as claimed in claim 1, 2 or 3, wherein said crystalline ethylene polymer (I) has a melting point of from 122 to 128°C and a density of from 0.915 to 0.935 g/cm³.

5. A film as claimed in any preceding claim, wherein said ethylene-(meth)acrylate copolymer is a copolymer of ethylene and methyl methacrylate, ethyl methacrylate, butyl methacrylate, 2-ethylhexyl methacrylate, methyl acrylate, ethyl acrylate, butyl acrylate or 2-ethylhexyl acrylate; said ethylene-(meth)acrylic acid copolymer is a copolymer of ethylene and methacrylic acid or acrylic acid; said ethylene-unsaturated glycidyl monomer-vinyl acetate terpolymer is an ethylene-glycidyl methacrylate-vinyl acetate terpolymer; and said ethylene-unsaturated dicarboxylic anhydride-(meth)acrylate terpolymer is an ethylene-maleic anhydride-ethyl acrylate terpolymer.

6. A film as claimed in any preceding claim, wherein said ethylene copolymer (II) is present in an amount of from 0.2 to 9.0% by weight.

7. A film as claimed in claim 6, wherein said ethylene copolymer (II) is present in an amount of from 0.4 to 8.0% by weight.

8. A film as claimed in any preceding claim, wherein said ethylene copolymer (II) has a melting point of 50°C or more.

9. A laminate film for metal deposition comprising a substrate layer having formed on at least one suface thereof a layer for metal deposition comprising a film as claimed in any preceding claim.

10. A resin composition for forming a film for metal deposition and comprising
(I) from 90.5 to 99.9% by weight of a crystalline ethylene polymer having a melting point of from 120 to 130°C and a density of from 0.910 to 0.940 g/cm³, and
(II) from 0.1 to 9.5% by weight of at least one ethylene copolymer having an ethylene content of from 50 to 95% by weight selected from an ethylene-(meth)acrylate copolymer, an ethylene-(meth)acrylic acid copolymer, an ethylene-unsaturated glycidyl monomer-vinyl acetate terpolymer, and an ethylene-unsaturated dicarboxylic anhydride-(meth)acrylate terpolymer.

## Patentansprüche

1. Folie für Metallabscheidung, hergestellt aus einer Harzzusammensetzung, umfassend:
(I) von 90,5 bis 99,9 Gew.-% eines kristallinen Ethylenpolymers mit einem Schmelzpunkt von 120 bis 130°C und einer Dichte von 0,910 bis 0,940 g/cm³ und
(II) von 0,1 bis 9,5 Gew.-% mindestens eines Ethylencopoylmers mit einem Ethylengehalt von 50 bis 95 Gew.-%, ausgewählt aus einem Ethylen-(Meth-)Acrylsäureester-Copolymer, eines Ethylen-(Meth-)Acrylsäure-Copolymer, einem Ethylen-ungesättigtes Glycidylmonomer-Essigsäurevinylester-Terpolymer und einem Ethylen-ungesättigtes Dicarbonsäureanhydrid-(Meth-)Acrylsäureester-Terpolymer.

2. Folie gemäß Anspruch 1, wobei das kristalline Ethylenpolymer ein Ethylen-α-Olefin-Copolymer ist.

3. Folie gemäß Anspruch 2, wobei das α-Olefin Propylen, Buten-1, 4-Methylpenten-1, Hexen-1 oder Okten-1 ist.

4. Folie gemäß Anspruch 1, 2 oder 3, wobei das kristalline Ethylenpolymer (I) einen Schmelzpunkt von 122 bis 128°C und eine Dichte von 0,915 bis 0,935 g/cm³ aufweist.

5. Folie gemäß einem der vorhergehenden Ansprüche, wobei das Ethylen-(Meth-) Acrylsäureester-Copolymer ein Copolymer aus Ethylen und Methacrylsäuremethylester, Methacrylsäureethylester, Methacrylsäurebutylester, Methacrylsäure-2-ethylhexylester, Acrylsäuremethylester, Acrylsäureethylester, Acrylsäurebutylester oder Acrylsäure-2-ethylhexylester ist; das Ethylen-(Meth-)Acrylsäure-Copolymer ein Copolymer aus Ethylen und Methacrylsäure oder Acrylsäure ist; das Ethylen-ungesättigtes Gylcidylmonomer-Essigsäurevinylester-Terpolymer ein Ethylen-Methacrylsäure-glycidylester-Essigsäurevinylester-Terpolymer ist; und das Ethylen-ungesättigtes Dicarbonsäureanhydrid-(Meth-)Acrylsäureester-Terpolymer ein Ethylen-Maleinsäureanhydrid-Ethyl-Acrylsäureester-Terpolymer ist.

6. Folie gemäß einem der vorhergehenden Ansprüche, wobei das Ethylencopolymer (II) in einer Menge von 0,2 bis 9,0 Gew.-% vorliegt.

7. Folie gemäß Anspruch 6, wobei das Ethylencopolymer (II) in einer Menge von 0,2 bis 8,0 Gew.-% vorliegt.

8. Folie gemäß jedem der vorhergehenden Ansprüche, wobei das Ethylencopolymer (II) einen Schmelzpunkt von 50°C oder darüber aufweist.

9. Schichtfolie für Metallabscheidung, umfassend eine Substratschicht, bei der auf mindestens einer Oberfläche eine Schicht für Metallabscheidung, umfassend eine Folie, wie in einem der vorhergehenden Ansprüche beansprucht, erzeugt worden ist.

10. Harzzusammensetzung zur Herstellung einer Folie für Metallabscheidung, die umfaßt
(I) von 90,5 bis 99,9 Gew.-% eines kristallinen Ethylenpolymers mit einem Schmelzpunkt von 120 bis 130°C und einer Dichte von 0,910 bis 0,940 g/cm³ und
(II) von 0,1 bis 9,5 Gew.-% mindestens eines Ethylencopoylmers mit einem Ethylengehalt von 50 bis 95 Gew.-%, ausgewählt aus einem Ethylen-(Meth-)Acrylsäureester-Copolymer und Ethylen-(Meth-)Acrylsäure-Copolymer, einem Ethylen-ungesättigtes Glycidylmonomer-Essigsäurevinylester-Terpolymer und einem Ethylen-ungesättigtes Dicarbonsäureanhydrid-(Meth-)Acrylsäureester-Terpolymer.

## Revendications

1. Film pour le dépôt de métal formé à partir d'une composition de résine comprenant :
(I) de 90,5 à 99,9% en poids d'un polymère d'éthylène cristallin ayant un point de fusion de 120 à 130°C et une densité de 0,910 à 0,940 g/cm³, et
(II) de 0,1 à 9,5% en poids d'au moins un copolymère d'éthylène ayant une teneur en éthylène de 50 à 95% en poids choisi parmi un copolymère d'éthylène-(méth)acrylate, un copolymère d'éthylène-acide (méth)acrylique, un terpolymère d'éthylène-monomère glycidylique insaturé-acétate de vinyle et un terpolymère d'éthylène-anhydride dicarboxylique insaturé-(méth)acrylate.

2. Film selon la revendication 1, dans lequel ledit polymère d'éthylène cristallin (I) est un copolymère d'éthylène-oléfine-α.

3. Film selon la revendication 2, dans lequel ladite oléfine-α est le propylène, le buténe-1, le 4-méthylpentène-1, l'hexène-1 ou l'octène-1.

4. Film selon la revendication 1,2 ou 3, dans lequel ledit polymère d'éthylène cristallin (I) présente un point de fusion de 122 à 128°C et une densité de 0,915 à 0,935 g/cm³.

5. Film selon l'une quelconque des revendications précédentes, dans lequel ledit copolymère d'éthylène-(méth)acrylate est un copolymère d'éthylène et de méthacrylate de méthyle, de méthacrylate d'éthyle, de méthacrylate de butyle, de méthacrylate de 2-éthylhexyle, d'acrylate de méthyle, d'acrylate d'éthyle, d'acrylate de butyle ou d'acrylate de 7-éthulhexyle; ledit copolymère d'éthylène-acide (méth)acrylique est un copolymère d'éthylène et d'acide méthacrylique ou d'acide acrylique; ledit terpolymère d'éthylène-monomère glycidylique insaturé-acétate de vinyle est un terpolymère d'éthylène-méthacrylate de glycidyle-acétate de vinyle; et ledit terpolymère d'éthyléne-anhydride dicarboxylique insaturé-(méth)acrylate est un terpolymère d'éthylène-anhydride maléique-acrylate d'éthyle.

6. Film selon l'une quelconque des revendications précédentes, dans lequel ledit copolymère d'éthylène (II) est présent dans une quantité de 0,2 à 9,0% en poids.

7. Film selon la revendication 6, dans lequel ledit copolymère d'éthylène (Il) est présent dans une quantité de 0,4 à 8,0% en poids.

8. Film selon l'une quelconque des revendications précédentes, dans lequel ledit copolymère d'éthylène (II) présente un point de fusion de 50°C ou supérieur.

9. Film stratifié pour le dépôt de métal comprenant une couche de substrat présentant formée sur au moins une surface de celle-ci une couche pour le dépôt de métal comprenant un film selon l'une quelconque des revendications précédentes.

10. Composition de résine pour la formation d'un film pour le dépôt de métal et comprenant
(I) de 90,5 à 99,9 % en poids d'un polymère d'éthylène cristallin ayant un point de fusion de 120 à 130°C et une densité de 0,910 à 0,940 g/cm³, et
(II) de 0,1 à 9,5% en poids d'au moins un copolymère d'éthylène ayant une teneur en éthylène de 50 à 95% en poids choisi parmi un copolymère d'éthylène-(méth)acrylate, un copolymère d'éthylène-acide (méth)acrylique, un terpolymère d'éthylène-monomère glycidylique insaturé-acétate de vinyle et un terpolymère d'éthylène-anhydride dicarboxylique insaturé-(méth)acrylate.
